# EUROPEAN PATENT SPECIFICATION

(11) **EP 1 871 547 B1**
(45) Date of publication and mention of the grant of the patent: **21.09.2011**
(21) Application number: 06726515.7
(22) Date of filing: 24.03.2006
(51) Int. Cl.: B08B 7/00, B08B 11/00, F26B 11/04, B44D 3/12

(54) **APPARATUS AND METHOD FOR THERMALLY REMOVING COATINGS AND/OR IMPURITIES**
VORRICHTUNG UND VERFAHREN ZUM THERMISCHEN ENTFERNEN VON BESCHICHTUNGEN ODER VERUNREINIGUNGEN
APPAREIL ET PROCEDE DE RETRAIT THERMIQUE DE REVETEMENTS ET/OU D'IMPURETES

(30) Priority: 24.03.2005 GB 0506034
(43) Date of publication of application: 02.01.2008
(73) Proprietor: Perry, Ophneil Henry, Nottingham NG1 6EE (GB); Chalabi, Rifat A., Nottingham NG1 6EE (GB)
(72) Inventor: Perry, Ophneil Henry, Nottingham NG1 6EE (GB); Chalabi, Rifat A., Nottingham NG1 6EE (GB)
(74) Representative: Hallam, Arnold Vincent
(86) International application number: PCT/GB2006/001105
(87) International publication number: WO 2006/100511

(56) References cited:
- WO-A-01/98092
- WO-A-2004/059229
- FR-A- 880 701

## Description

This invention relates to apparatus and a method for thermally removing coatings and/or impurities from materials, particularly from materials which are particularly suited to batch processing. In particular the present invention relates to a development of the type of oven described in the applicants International Patent Application published as WO 01/98092 A1.

There is an increasing requirement to recycle materials such as aluminium, magnesium and other metals and non-metals. Often such materials will be coated in paint, oil, water, lacquers, plastics, or other volatile organic compounds (V.0.C.s) which must be removed prior to re-melting the materials. For materials which are capable ofbeing processed at relatively high temperatures without melting, such impurities are typically removed using a thermal process which is sometimes known as de-coating. Such thermal de-coating processes can also be used to dry and/or sterilize materials prior to remelting.

For example, aluminium is often used in the production of beverage cans which are typically coated in paint, lacquers and/or other V.O.C.s. Before used beverage cans (U.B.C.s) or scrap material produced during the manufacture of beverage cans can be melted down for recycling, any coatings or other impurities must be removed in order to minimize metal loss.

Thermal de-coating, however, is not limited in application to aluminium but can be used to clean or purify any metal or non-metallic materials which are capable of withstanding the temperatures present in the thermal de-coating process. Thermal de-coating can be used to de-coat or purify, for example, magnesium or magnesium alloys, or titanium or titanium alloys.

Known thermal de-coating processes involve exposing the material to be treated to hot gases in order to oxidise the coatings and/or impurities which are to be removed. This exposure takes place in a closed environment in which the temperature and oxygen content of the hot gases can be controlled. Temperatures in excess of 300 C are required to remove most organic compounds and an oxygen level in the range of 6% to 12% is normally required.

If the temperature and oxygen levels of the hot gases are not carefully controlled the decoating process can result in an uncontrolled operation which may be very dangerous.

The material will usually be shredded before treatment and it is important for effective de-coating that all the surfaces of the shredded material are exposed to the hot gases. If this does not occur then the treatment becomes less effective and, in the case ofU.B.C.s in particular, a black stain may be left on the surface of the treated material. It is also desirable for the material to be agitated during the treatment to physically remove lose coatings or impurities from the material.

At present there are three main systems which are used for thermal de-coating, these are:

### 1. Static Oven

In a static oven, the material is stacked on a wire mesh and hot gases are recirculated through the oven to heat the material to the required process temperature.

This arrangement is not efficient because the hot gases do not come into contact with the materials that are enclosed within the stack of materials on the mesh. As discussed previously, it is important in de-coating that all the surfaces of the materials being treated are exposed to the hot gases. Also there is no agitation of the material being treated.

### 2. Conveying Oven

This system uses a mesh belt conveyor to transport materials for treatment through an oven. Hot gasses are passed through the material on the belt as it passes through the oven. The problems with this method are as follows:
The depth ofmaterials on the belt limits the process. The materials are stacked, causing similar problems to those found with the static oven in which materials at the centre ofthe stack do not come into contact with the hot gases.
There is no agitation of the materials, so loose coatings are not removed.
The conveyor belt life is short.
The materials have to be constantly fed.
The process is not suitable for low volume or continuously changing product.

### 3. Rotating Kiln

A large kiln is inclined to the horizontal so that material fed or charged into the kiln at its highest end travels towards the lowest end, where it is discharged, under the influence of gravity. The kiln is rotated so that material within the kiln is agitated and a flow ofhot gases is provided to heat up the material as it travels through the kiln. A number of problems are associated with this method:
The material has to be constantly fed.
The process is not suitable for low volume or continuously changing product.
The continuous process requires air locks at both ends, materials charge end and materials discharge end.
The kiln requires a rotating seal leading to a high level of maintenance.

WO 01/98092 A1 describes a pivotable or tiltable oven that overcomes many of the disadvantages of the previously known apparatus and methods for thermal de-coating. For a detailed description of the construction and operation of the oven, the reader should refer to WO 01/98092 A1. However, briefly, the oven has a charging portion for receiving material to be treated and a changeover portion. Incorporated within the changeover portion is a heat treatment chamber through which a stream or flow of hot gasses can be passed. The oven is pivotally moveable between a first position in which the changeoverportion is higher than the charging portion and a second position in which the charging portion is higher than the changeover portion. The arrangement is such that the oven can be repeatedly moved between the first and second positions so that material within the oven falls from one portion to the other portion, passing through the stream of hot gasses in the heat treatment chamber. A method of using the apparatus is also disclosed.

The above known oven has the advantage that it can be used to treat comparatively low volumes of material in a batch process. A further advantage is that by controlling the movement ofthe oven, the material being treated can be brought into and out of the heat treatment chamber at will, enabling the oven to be operated safely without having an excessive amount ofVOC released that could cause self sustained process heating (also known as an autothermic process). This controlled movement ensures that the VOCs are released in a controlled manner and allows a fine degree of control of the treatment process.

In the preferred embodiment of the oven described in WO 01/98092 A1, the charging box is removably mounted to the oven. This conveniently enables materials to be loaded into and removed from the charging box at a location separate from the oven. The chargingbox once attached to the oven becomes an integral part of the structure of the oven and hence rotates with the oven so that material is transferred into and out of the charging box, and through the treatment chamber. It is taught that, preferably, the charging box is adapted for removal using a fork lift truck or any other suitable means for transporting the charging box to and from the oven.

The oven described in WO 01/98092 A1 has been found to work well, providing a commercially and technically acceptable means of thermally de-coating relatively low volumes of materials. However, it has been found that the use of a removable charging box is not ideal for certain applications.

WO 2004/059229, which is the closest prior art, discloses a rotatable oven which is loaded by attaching a charging box filled with material to be treated to the oven. The oven then rotates on a support to pass the material to be treated through a treatment zone in which hot gasses are circulated.

It is an object of the present invention to provide an improved oven in which the problems of the known ovens are overcome or at least reduced.

Thus, in accordance with a first aspect of the invention there is provided an apparatus for thermally de-coating and/or drying coated and/or contaminated materials, the apparatus comprising:
a support;
an oven mounted to the support and adapted for receiving material to be treated;
the oven being moveable relative to the support between a first position in which a first portion of the oven is generally higher than a second portion and a second position in which the second portion is generally higher than the first portion and the arrangement being such that, in use, the oven can be repeatedly moved between the first and second positions so that material within the oven falls from one portion to the other portion,
characterised in that the first portion incorporates a closable aperture through which material to be treated can be charged and in that a treatment zone through which a stream of hot gasses can be passed is provided.

The treatment zone may be located in the first or second portion of the oven, or partially in each portion, dependent upon the material to be treated and its topology.

In accordance with a second aspect of the invention, there is provided a method of thermally decoating and/or drying coated and/or contaminated materials comprising:
providing an oven adapted for receiving material to be treated and a changeover portion, the oven being moveable between a first position in which a first portion of the oven is generally higher than a second portion and a second position in which the second portion is generally higher than the first portion;
placing the material in the oven;
repeatedly moving the oven between the first and second positions so that the material in the oven falls from the one portion to the other portion
characterised in that the first portion incorporates a closable aperture through which material to be treated can be charged and in that a treatment zone through which a stream of hot gasses can be passed is provided.

The treatment zone may be located in the first or second portion of the oven, or partially in each portion, dependent upon the material to be treated and its topology.

A preferred embodiment ofthe invention will now be described, by way of example only, with reference to the accompanying drawings in which:
Figure 1 is a schematic, perspective view of an oven of an apparatus in accordance with the invention;
Figure 2 is a side view of the oven of Figure 1 and
Figures 3A- 3J are a series of schematic diagrams showing the various phases of operating cycle of an apparatus in accordance with the invention comprising the oven of Figure 1.

### Detailed Description of the Preferred Embodiments

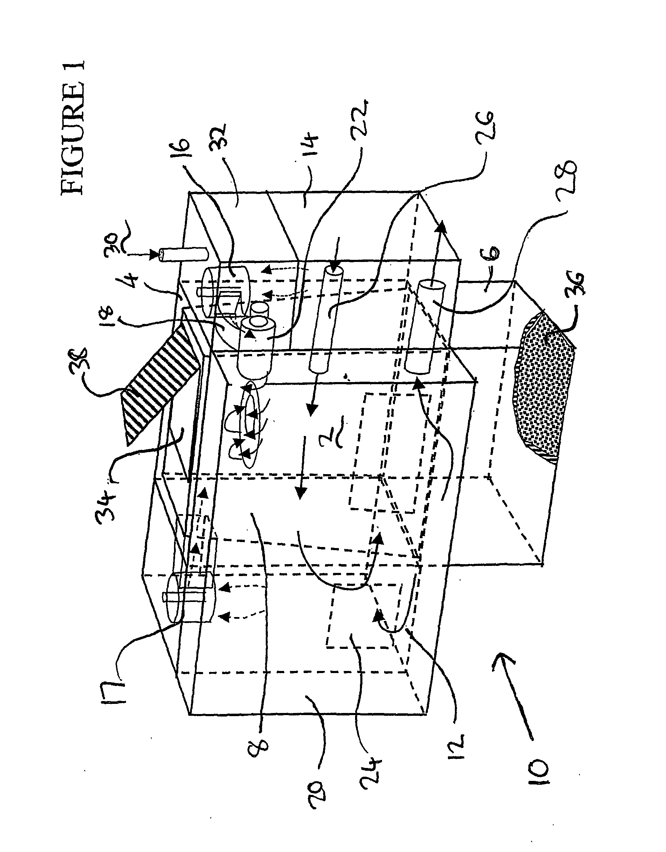

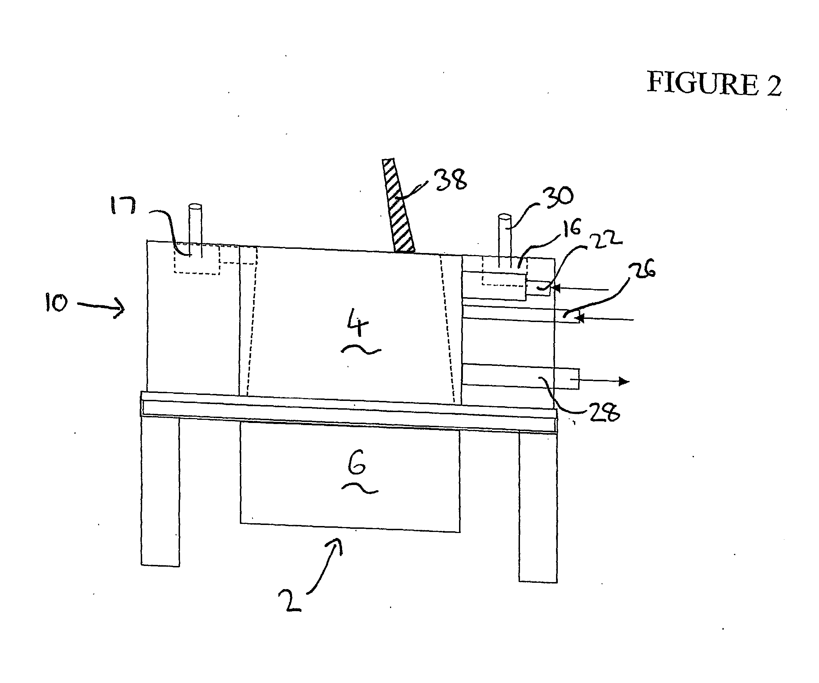

Referring to Figures 1 to 3, there is shown an oven, indicated generally at 10, which forms part of an apparatus for thermally de-coating and/or drying coated and/or contaminated materials.

The oven 10 comprises a process chamber shown generally at 2 and comprising a first portion 4 and a second portion 6, with a central zone 8. The treatment zone comprises the first portion 4 and the central zone 8. A stream of hot gasses 12 can be passed from one side of the oven 10 to the other through the treatment zone.

On one side ofthe oven is a recirculation chamber 14 into which the gasses are drawn from the central zone 8 by a first recirculating fan 16 and a second recirculating fan 17. An air-mixing jacket 18 guides the gases from the recirculation chamber 14 into an afterburner chamber 20 in which the gasses are heated by a burner 22. The walls of the afterburner chamber 20 can be air-cooled stainless steel walls or alternatively may be lined with a suitable refractory material.

The burner 22 which heats the gasses may be designed to run on either a gaseous or a liquid fuel or both. In a preferred embodiment the burner is also designed so as to be able to burn the volatile organic compounds (V.O.C.s) which are thermally stripped from the materials in the treatment zone. These V.O.C.s are drawn out of the treatment zone with the gases 12 by the recirculating fan 16 and are mixed with the air 3 0, if needed, in the mixing jacket 18. The air mixing jacket 18 is designed to ensure that the gasses enter the afterburner with a helical flow, as indicated by the arrows, which ensures that V.O.C.s have a maximum residence time and exposure to the hot zone of the burner flame.

By burning the V.O.C.s the overall thermal efficiency ofthe oven is increased since less fuel need be supplied to heat the gases 12 to the required operating temperature. If sufficient V.O.C.s are present, no additional fuel need be added to heat the gases to the required temperature so that the process can operate autothermically.

Burning the V.O.C.s also improves the control of emissions by removing these pollutants from the re-circulating gases and reducing the need for further and expensive treatment of gases which are exhausted from the afterburner chamber as will be described later.

From the afterburner chamber 20, the hot gases enter the treatment zone which extends over the first portion 4 and the central zone 8 of the process chamber 2 through an aperture 24 formed in a side wall of the process chamber 2 on the opposite side of the oven from the recirculation chamber 14.

A control system monitors and controls the level of oxygen and the temperature of the gases in the treatment zone to ensure the system operates within safe and effective limits for thermal de-coating of the material being treated. Typically, the oxygen level will be maintained below 16% whilst temperatures in excess of 300 °C are required to remove most organic compounds. A lance 26, regulated by the control system, supplies fresh air into the afterburner chamber 20 so as to control both the required level of oxygen and temperature of the gases. The afterburner chamber 20 exhausts combustion gases through an exhaustpipe 28, the flow of exhaust gases being controlled via temperature and pressure controlled damper (not shown).

An auxiliary fresh air inlet 30 is also provided in the recirculation chamber 14. The auxiliary inlet 30 allows air to enter the recirculation chamber via an air supply chamber 32 to mix with the hot gases and to cool the fan 16 if needed. The control system monitors the temperature of the fan and operates a valve to control the flow of air through the auxiliary inlet to maintain the temperature of the fan below its maximum permitted operating temperature. The control system balances the flow of air through the lance 26 and the auxiliary inlet 30 in order to maintain the required oxygen content and temperature of the gases in the treatment zone.

An outer wall of the first portion 4 of the process chamber 2 includes an aperture 34 for initially receiving scrap material 36 to be treated. The aperture 34 is closed by a door 38.

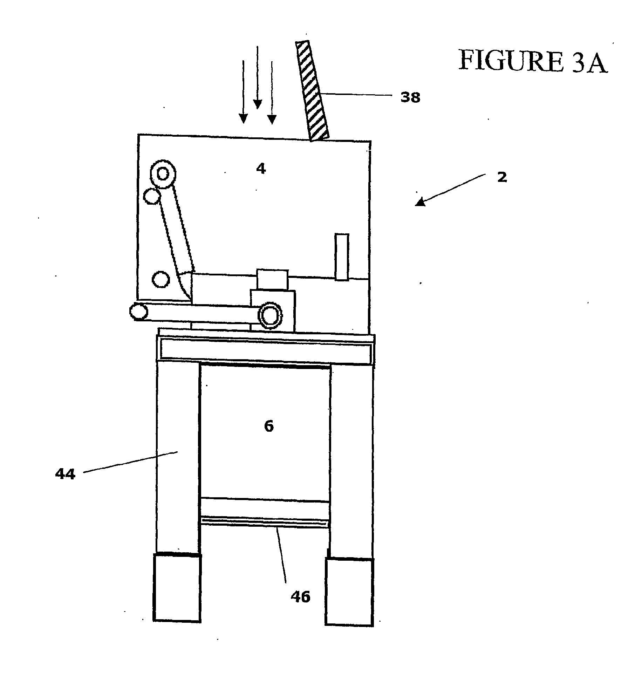

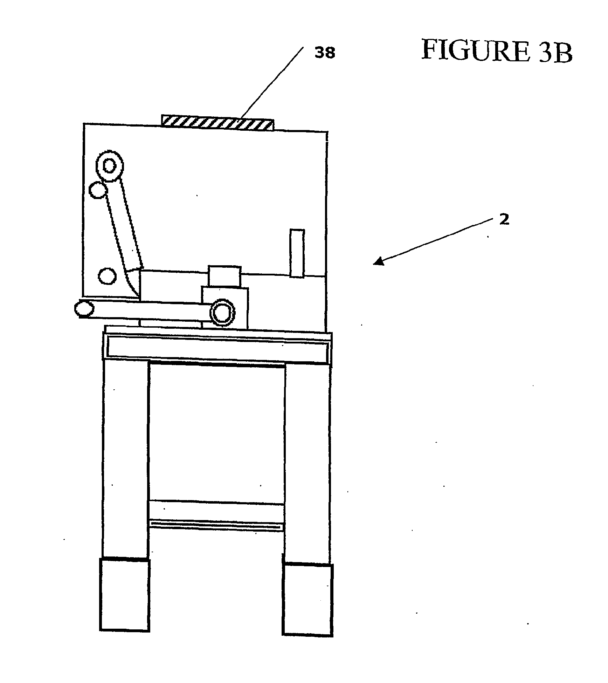

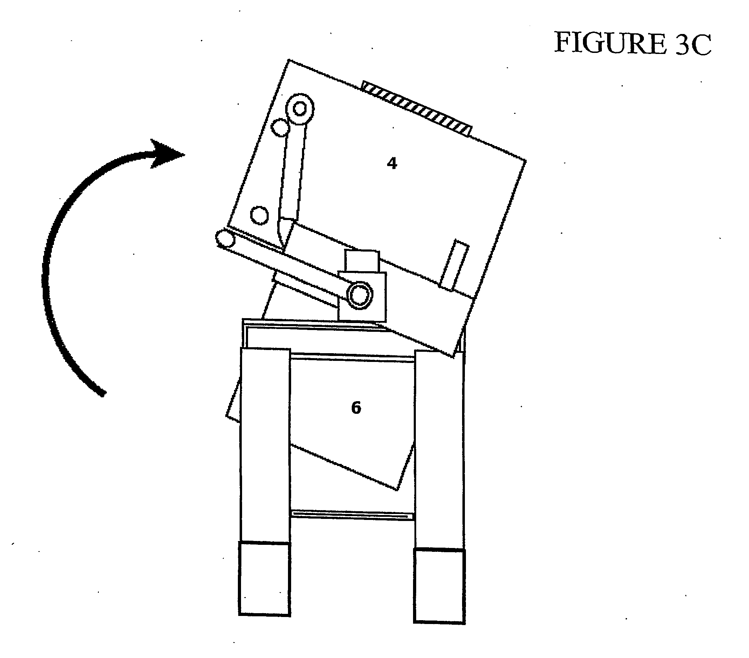

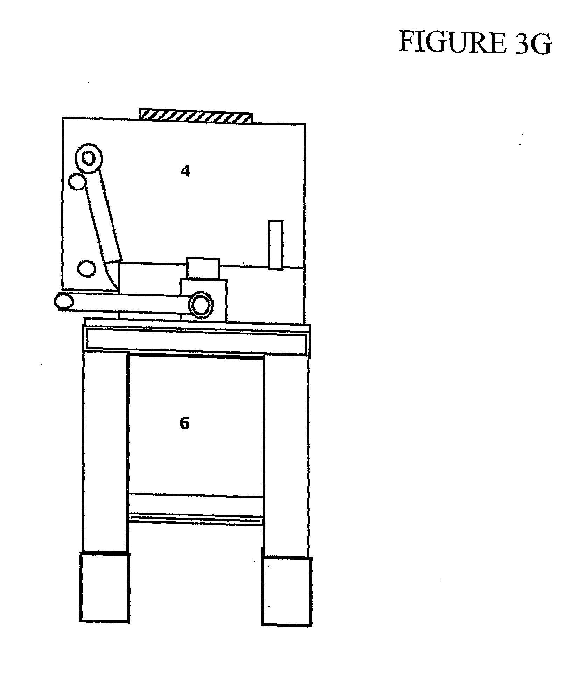

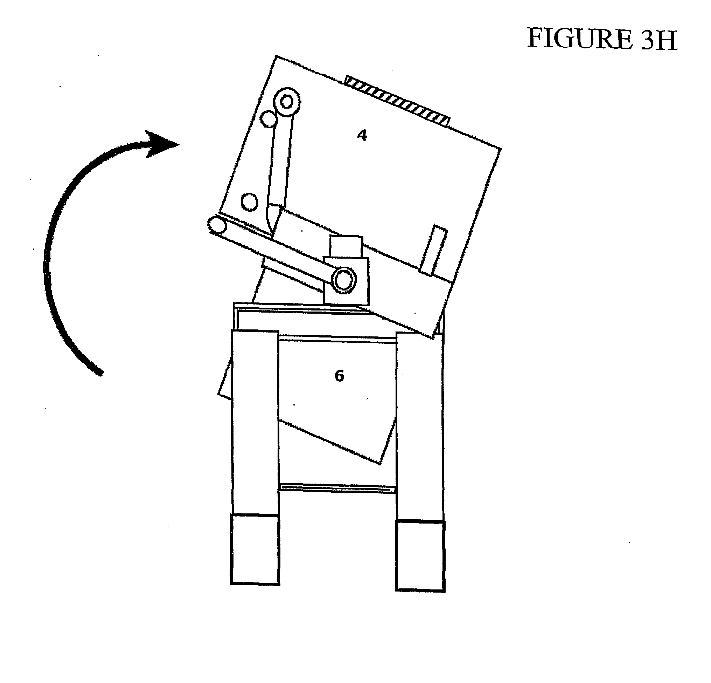

The oven 10 is pivotablymounted to a support structure 44 having abase frame 46 (see Figure 3A). As shown in Figures 3B to 3J, the oven can be moved between a first position 3B in which the first portion 4 is higher than the second portion 6 and a second position 3D in which the second portion 6 is higher than the first portion 4. In an alternative mode of operation, the movement could be in a continuous rotational movement, completing 360-degree rotation.

Means (not shown) are provided for automatically moving the oven between the first and second positions under the control of the control system for the apparatus. This means can be of any suitable form and may for example comprise one or more electric or hydraulic motors. The motors may act through a gearbox if required. Alternatively the means may comprise one or more hydraulic or pneumatic rams. The means could also comprise a combination of motors and rams.

Operation of the apparatus will now be described with reference to Figures 3A to 3J in particular.

The material 36 to be processed is loaded via the aperture 34 into the process chamber 2 and falls under gravity to the second portion 6. The treatment process can then be initiated under the control of the control system.

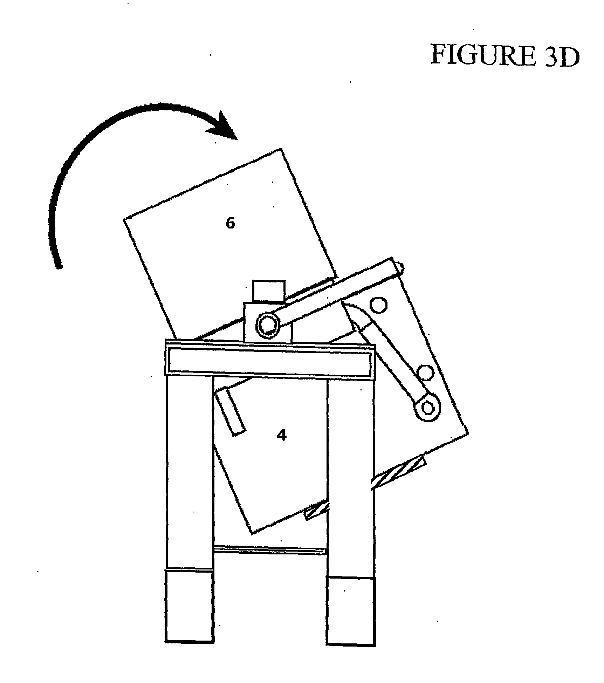

The gases passing through the treatment zone are heated and the oven rotated from the first position as shown in Figure 3B until it reaches the second position shown in Figure 3D in which the oven is nearly inverted.

As the oven is rotated, the materials in the process chamber 2 will fall under the influence of gravity into the first portion 4 passing through the stream ofhot gases in the treatment zone. It should be noted that the material passes through the stream ofhot gases 12 transverselyto the direction of flow of the hot gases through the treatment zone.

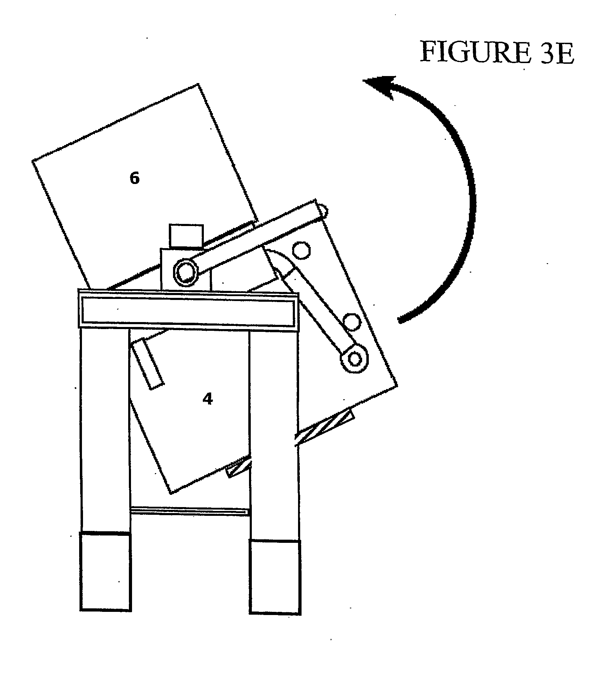

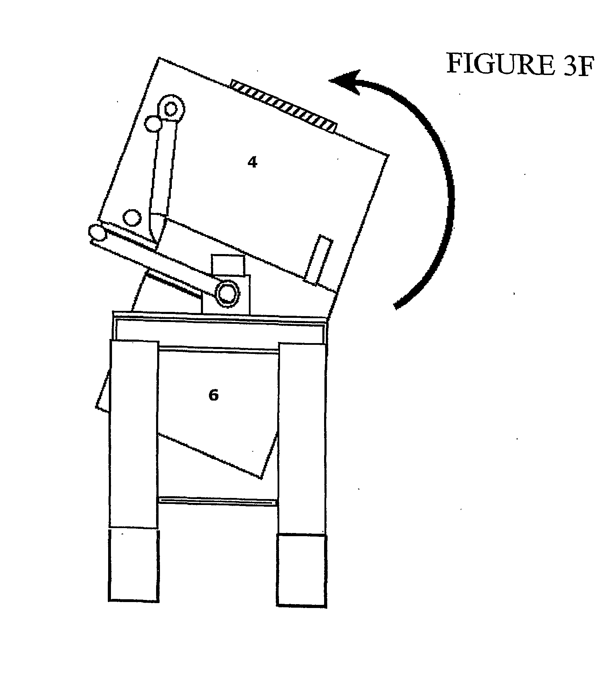

The rotary movement of the oven can continue to complete 360 degrees or be reversed, as shown in Figures 3E and 3F, until the oven reaches the first position. During this rotary movement, the materials will fall from the first portion 4 into the second portion 6, again passing through the stream ofhot gases 12. The rotational movement of the oven between the first and second positions is repeated a number of times as required by the process control until the material 36 is fully treated.

The treatment process goes through a number of phases or cycles: a heating cycle during which the hot gases and the materials are brought up to the required treatment temperature, a treatment cycle in which the temperature of the gasses and materials is maintained at the treatment temperature, and finally a cooling cycle during which the temperature ofthe gases and the treated material is brought down to a level at which the material can be safely removed.

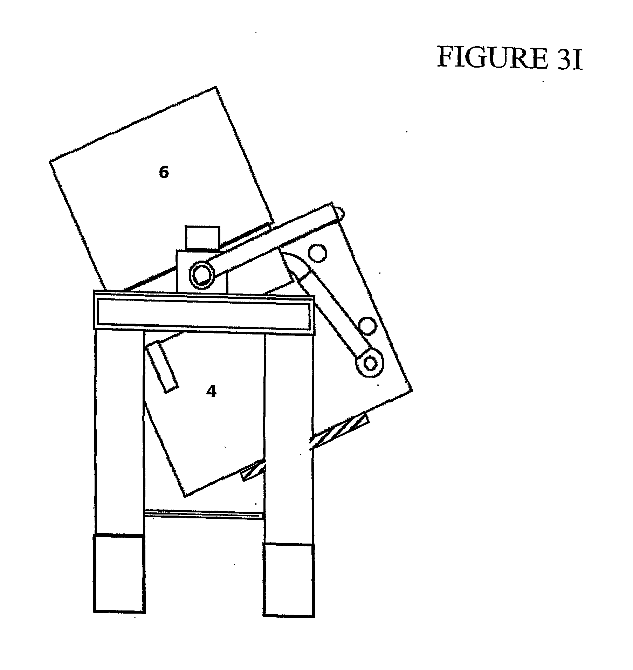

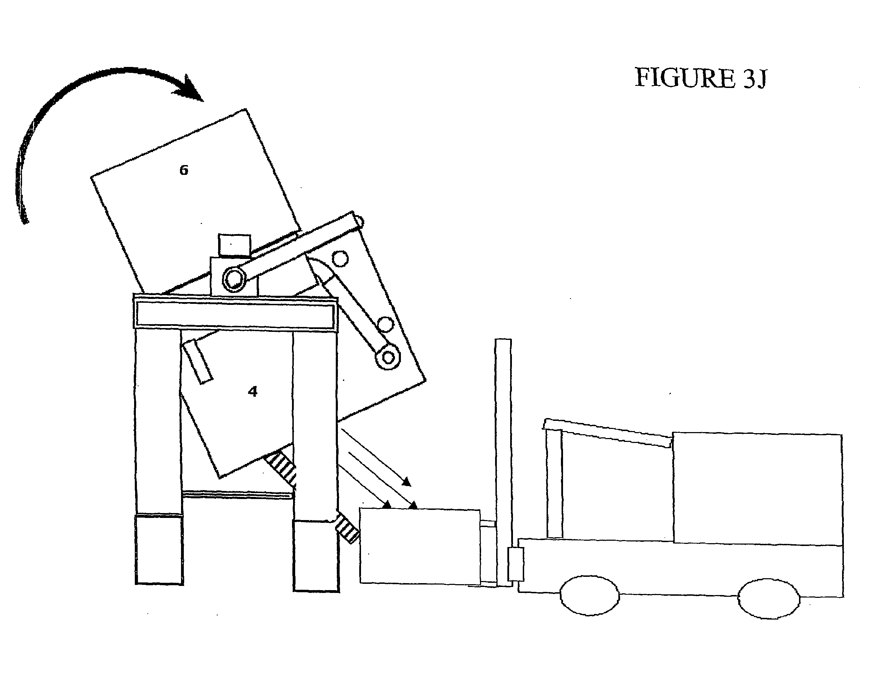

Once the treatment process is completed, the oven is returned to the position as shown in Figure 3I and the door 3 8 is opened, as shown in Figure 3J, so that the treated material can be transported for cooling, storage or further processing as required.

The rotary motion of the oven ensures that the material to be treated passes through the stream of gases in the treatment chamber in a controlled manner. The falling action ofthe material also ensures that all the surfaces of the material become fully exposed to the gases promoting an efficient and effective de-coating and/or decontamination.

The control system controls the speed and frequency of the rotary movement of the oven along with the temperature and oxygen level of the gases in order to oxidize coatings or impurities on the material 36 whilst ensuring the process is carried out safely and efficiently with minimum loss of the material being treated.

A particular feature ofthe apparatus is the ability for the system to stop the rotary motion ofthe oven at any time. This can be particularly useful when treating heavily coated materials to ensure that the temperature in the afterburner does not increase in an uncontrolled manner due to the high level of V.O.C.s present in the gases. When the apparatus stops rotating, the amount of combustible material in the gases is reduced and the combustion process slows down and hence the temperature drops back to the controlled level. As the temperature returns to acceptable levels, the apparatus resumes rotation and the treatment process continues. This ability to stop the rotation ofthe oven ensures a controlled volatile release throughout the treatmentprocess. The combustion process can be further slowed down by stopping the oven in a position in which the material drops into the second portion 6. This ensures the material is out ofthe gas flow and away from the hot surfaces of the treatment zone.

In addition to the rotary movement of the oven, the apparatus maybe provided with means, such as an electro/mechanical vibrator (not shown), for vibrating the oven or at least apart ofthe oven. The vibration means can also be controlled by the control system. This additional vibrating action allows the apparatus to transfer the materials between the first portion 4 and the second portion 6 in a finer and more controlled quantity to promote a better exchange between the hot gases and the material.

The vibration motion can also be used to facilitate mechanical stripping of the coating and contaminates from the material 3 6. For example, the arrangement canbe such that the material is vibrated at a frequency which is equal or close to its natural or resonance frequency. Alternatively, the oven (or at least parts ofthe oven such as the first portion 4 and/or the second portion 6) can be vibrated at its natural or resonance frequency. Hence allowing the material to vibrate efficiently which increases the abrasion forces and allows the gases to penetrate and treat the material 36.

The apparatus in accordance with the invention is particularly suited for treatment of relatively small quantities of material. This enables a cost effective treatment of materials on much smaller scales than the known rotary kiln or conveying oven apparatus but without the drawbacks of the static oven. Because the materials are processed in batches, the apparatus can be adapted to treat a variety of materials by resetting of the control system between batches.

The apparatus according to the invention can be made relatively small compared with the know rotary kilns or conveying ovens and so takes up much less floor space. The apparatus in accordance with the invention is also relatively simple and requires less maintenance than the known apparatus.

A further advantage of the apparatus in accordance with the invention is that it requires less supporting equipment than the known rotary kiln and conveying oven apparatus which typically require in feed conveyor belts, discharging conveyor belts, and storage hoppers to maintain a continuous operation.

The apparatus as described above can be modified in a number of ways. For example, a jet stirring system (not shown) can be provided to agitate and stir the material in the heat treatment chamber. This allows the hot gases in the heat treatment chamber to reach more of the material being treated and so improves the efficiency of the process. Such a system may comprise one or more jets which can emit a constant stream or blasts of a gaseous material to stir the material in the heat treatment chamber. The gaseous material may be fresh air and may form part of the control system for controlling the oxygen and temperature levels in the oven. Alternatively, the gaseous material can be part of the gases 12 recirculating about the oven.

It is also possible to incorporate one or more tools (not shown) into the apparatus in order to carry out further treatment or control of the material in the oven. Examples of the type of tools (not shown) which may be incorporated into the apparatus include:

A shredding means for shredding the material as it drops from the first portion 4 into the second portion 6. Such a shredding means maybe a rotary shear shredder or any other suitable form of shredder known in the art.

Alternatively or in addition, the apparatus may hold an electromagnetic non-ferrous metal separator for separating non-ferrous metals from the rest of the material being treated. The separator acts on the material passing between the first portion 4 and the second portion 6. Typically such a separation will be carried out towards the end of the cooling cycle of the process and the non-ferrous metal will be collected in a separate bin from the rest of the material. The separator may be of any suitable type such as those which are known in the art.

A feeding means may also be provided in the apparatus to control the movement of the material between the first portion 4 and the second portion 6. The feeding means may comprise a damper system or any other suitable system for controlling the release ofmaterial from the second portion 6 The use of such a feeding means allows material to be slowlyreleased from the second portion 6 into the first portion 4 for treatment in a substantially continuous manner. This can be useful in controlling the release of V.O.C.s.

## Claims

1. Apparatus for thermally de-coating and/or drying coated and/or contaminated materials, the apparatus comprising:
a support (44);
an oven (10) mounted to the support (44) and adapted for receiving material to be treated;
the oven (10) being moveable relative to the support (44) between a first position in which a first portion (4) of the oven is generally higher than a second portion (6) and a second position in which the second portion (6) is generally higher than the first portion (4) and the arrangement being such that, in use, the oven (10) can be repeatedly moved between the first and second positions so that material within the oven (10) falls from one portion to the other portion, and a treatment zone through which a stream of hot gasses can be passed;
**characterised in that** the first portion (4) incorporates a closable aperture (34) through which material to be treated can be charged.

2. Apparatus as claimed in claim 1, in which the treatment zone is located in the first (4) or second (6) portion of the oven, or partially in each portion.

3. Apparatus as claimed in any preceding claim, wherein the oven (10) comprises a process chamber (2) including a first portion and a second portion with a central zone.

4. Apparatus as claimed in claim 3,wherein a recirculation chamber (14) can be attached to the oven (10) into which chamber the gases are drawn from the central zone.

5. Apparatus as claimed in claim 4 wherein an air-mixing jacket (18) guides the gases from the re-circulation chamber (14) into an afterburner chamber (20) in which the gases are heated by a burner (22).

6. Apparatus as claimed in any preceding claim, wherein the burner (22) burns the volatile organic compounds which are thermally stripped from the materials in the treatment zone.

7. Apparatus as claimed in any preceding claim, wherein a control system monitors and controls the level of oxygen and the temperature of the gases in the treatment zone to ensure the system operates within safe and effective limits for thermal de-coating of the material being treated.

8. A method of thermally de-coating and/or drying coated and/or contaminated materials comprising:
providing an oven (10) adapted for receiving material to be treated and a changeover portion, the oven being moveable between a first position in which a first portion (4) of the oven is generally higher than a second portion (6) and a second position in which the second portion (6) is generally higher than the first portion (4), the oven (10) having a treatment zone through which a stream of hot gasses can be passed;
repeatedly moving the oven (10) between the first and second positions so that the material in the oven falls from the one portion to the other portion
**characterised in that** the step of placing the material in the oven (10) is carried out through as closable aperture (34) incorporated in the first portion.

9. A method as claimed in claim 8, further comprising controlling the level of oxygen and the temperature of the gases in the treatment zone to ensure the system operates within safe and effective limits for thermal de-coating of the material being treated.

10. A method as claimed in claim 9, wherein the method includes controlling the oxygen level to be below 16% whilst temperatures are in excess of 300°C.

11. A method as claimed in claim 8 further comprising controlling the release of volatile organic compounds in the treatment process by stopping the rotation of the oven (10).

12. A method as claimed in claim 11 wherein stopping the rotation of the oven (10) comprises stopping the rotation of the oven in a position in which the material therein drops into the second portion (6) out of the gas flow and away from hot surfaces of the treatment zone.

## Patentansprüche

1. Vorrichtung zum thermischen Entschichten und/oder Trocknen beschichteter und/oder verunreinigter Materialien, wobei die Vorrichtung Folgendes umfasst:
eine Auflage (44),
einen Ofen (10), der an der Auflage (44) angebracht und dafür eingerichtet ist, zu behandelndes Material aufzunehmen,
wobei der Ofen (10) im Verhältnis zu der Auflage (44) bewegt werden kann zwischen einer ersten Stellung, in der ein erster Abschnitt (4) des Ofens im Allgemeinen höher ist als ein zweiter Abschnitt (6), und einer zweiten Stellung, in welcher der zweite Abschnitt (6) im Allgemeinen höher ist als der erste Abschnitt (4), und die Anordnung derart ist, dass der Ofen (10) bei Anwendung wiederholt zwischen der ersten und der zweiten Stellung bewegt werden kann, so dass das Material innerhalb des Ofens (10) von dem einen Abschnitt zu dem anderen Abschnitt fällt,
und einen Behandlungsbereich, durch den ein Strom von heißen Gasen geführt werden kann,
**dadurch gekennzeichnet, dass** der erste Abschnitt (4) eine verschließbare Öffnung (34) umfasst, durch die zu behandelndes Material beschickt werden kann.

2. Vorrichtung nach Anspruch 1, wobei der Behandlungsbereich in dem ersten (4) oder dem zweiten (6) Abschnitt des Ofens oder teilweise in jedem Abschnitt angeordnet ist.

3. Vorrichtung nach einem der vorhergehenden Ansprüche, wobei der Ofen (10) eine Prozesskammer (2) umfasst, die einen ersten Abschnitt und einen zweiten Abschnitt mit einem zentralen Bereich einschließt.

4. Vorrichtung nach Anspruch 3, wobei eine Rückführungskammer (14) an dem Ofen (10) befestigt werden kann, wobei in diese Kammer die Gase aus dem zentralen Bereich abgezogen werden.

5. Vorrichtung nach Anspruch 4, wobei ein Luftvermischungsmantel (18) die Gase aus der Rückführungskammer (14) in eine Nachbrennerkammer (20) leitet, in der die Gase durch einen Brenner (22) erhitzt werden.

6. Vorrichtung nach einem der vorhergehenden Ansprüche, wobei der Brenner (22) die flüchtigen organischen Verbindungen verbrennt, die thermisch von den Materialien in dem Behandlungsbereich abgestreift werden.

7. Vorrichtung nach einem der vorhergehenden Ansprüche, wobei eine Regelungsanlage das Niveau von Sauerstoff und die Temperatur der Gase in dem Behandlungsbereich überwacht und regelt, um sicherzustellen, dass die Anlage innerhalb sicherer und wirksamer Grenzen zum thermischen Entschichten des gerade behandelten Materials arbeitet.

8. Verfahren zum thermischen Entschichten und/oder Trocknen beschichteter und/oder verunreinigter Materialien, das Folgendes umfasst:
das Bereitstellen eines Ofens (10), der dafür eingerichtet ist, zu behandelndes Material aufzunehmen, und eines Wechselabschnitts, wobei der Ofen bewegt werden kann zwischen einer ersten Stellung, in der ein erster Abschnitt (4) des Ofens im Allgemeinen höher ist als ein zweiter Abschnitt (6), und einer zweiten Stellung, in welcher der zweite Abschnitt (6) im Allgemeinen höher ist als der erste Abschnitt (4), wobei der Ofen (10) einen Behandlungsbereich hat, durch den ein Strom von heißen Gasen geführt werden kann,
das wiederholte Bewegen des Ofens (10) zwischen der ersten und der zweiten Stellung, so dass das Material in dem Ofen von dem einen Abschnitt zu dem anderen Abschnitt fällt,
**dadurch gekennzeichnet, dass** der Schritt des Platzierens des Materials in dem Ofen (10) durch eine verschließbare Öffnung (34) ausgeführt wird, die in den ersten Abschnitt eingeschlossen ist.

9. Verfahren nach Anspruch 8, das ferner das Regeln des Niveaus von Sauerstoff und der Temperatur der Gase in dem Behandlungsbereich umfasst, um sicherzustellen, dass die Anlage innerhalb sicherer und wirksamer Grenzen zum thermischen Entschichten des gerade behandelten Materials arbeitet.

10. Verfahren nach Anspruch 9, wobei das Verfahren das Regeln des Sauerstoffniveaus, so dass es unter 16 % liegt, umfasst, während die Temperaturen über 300°C betragen.

11. Verfahren nach Anspruch 8, das ferner das Regeln der Freisetzung von flüchtigen organischen Verbindungen in dem Behandlungsprozess durch das Anhalten der Drehung des Ofens (10) umfasst.

12. Verfahren nach Anspruch 11, wobei das Anhalten der Drehung des Ofens (10) das Anhalten der Drehung des Ofens in einer Stellung umfasst, in der das Material in demselben in den zweiten Abschnitt (6) aus dem Gasstrom und weg von heißen Oberflächen des Behandlungsbereichs fällt.

## Revendications

1. Appareil pour le retrait thermique de revêtements et/ou le séchage de matériaux revêtus et/ou contaminés, l'appareil comprenant :
un support (44) ;
un four (10), monté sur le support (44) et adapté pour recevoir le matériau devant être traité ;
le four (10) pouvant être déplacé par rapport au support (44) entre une première position, dans laquelle une première partie (4) du four est en général plus haute qu'une deuxième partie (6), et une deuxième position, dans laquelle la deuxième partie (6) est en général plus haute que la première partie (4), l'agencement étant tel qu'en service, le four (10) peut être déplacé de manière répétée entre les première et deuxième positions, de sorte que le matériau contenu dans le four (10) tombe d'une partie vers l'autre partie,
et une zone de traitement à travers laquelle peut s'écouler un courant de gaz chauds ;
**caractérisé en ce que** la première partie (4) incorpore une ouverture à fermeture (34) à travers laquelle le matériau devant être traité peut être chargé.

2. Appareil selon la revendication 1, dans lequel la zone de traitement est agencée dans la première (4) ou dans la deuxième (6) partie du four, ou partiellement dans chaque partie.

3. Appareil selon l'une quelconque des revendications précédentes, dans lequel le four (10) comprend une chambre de traitement (2), englobant une première partie et une deuxième partie, avec une zone centrale.

4. Appareil selon la revendication 3, dans lequel une chambre de recirculation (14) peut être fixée sur le four (10), les gaz étant entraînés dans cette chambre à partir de la zone centrale.

5. Appareil selon la revendication 4, dans lequel une gaine de mélange d'air (18) assure le guidage des gaz de la chambre de recirculation (14) vers une chambre de postcombustion (20), dans laquelle les gaz sont chauffés par un brûleur (22).

6. Appareil selon l'une quelconque des revendications précédentes, dans lequel le brûleur (22) assure la combustion des composés organiques volatiles éliminés de manière thermique des matériaux dans la zone de traitement.

7. Appareil selon l'une quelconque des revendications précédentes, dans lequel un système central assure la surveillance et le contrôle du niveau d'oxygène et de la température des gaz dans la zone de traitement, pour assurer un fonctionnement du système dans le cadre de limites sûres et efficaces en vue du retrait thermique du revêtement du matériau en cours de traitement.

8. Procédé de retrait thermique de revêtements et/ou de séchage de matériaux revêtus et/ou contaminés, comprenant les étapes ci-dessous :
fourniture d'un four (10), adapté pour recevoir le matériau devant être traité, et une partie de changement, le four pouvant être déplacé entre une première position, dans laquelle une première partie (4) du four est en général plus haute qu'une deuxième partie (6), et une deuxième position, dans laquelle la deuxième partie (6) est en général plus haute que la première partie (4), le four (10) comportant une zone de traitement à travers laquelle peut s'écouler un courant de gaz chauds ;
déplacement répété du four (10) entre les première et deuxième positions, de sorte que le matériau contenu dans le four tombe d'une partie vers l'autre partie ;
**caractérisé en ce que** l'étape de mise en place du matériau dans le four (10) est exécutée à travers une ouverture à fermeture (34) incorporée dans la première partie.

9. Procédé selon la revendication 8, comprenant en outre l'étape de contrôle du niveau d'oxygène et de la température des gaz dans la zone de traitement, pour assurer le fonctionnement du système dans le cadre de limites sûres et efficaces en vue du retrait du revêtement du matériau en cours de traitement.

10. Procédé selon la revendication 9, dans lequel le procédé englobe l'étape de contrôle du niveau d'oxygène pour le maintenir en dessous de 16% en présence de températures supérieures à 300°C.

11. Procédé selon la revendication 8, comprenant en outre l'étape de dégagement des composés organiques volatiles dans le processus de traitement en arrêtant la rotation du four (10).

12. Procédé selon la revendication 11, dans lequel l'étape d'arrêt de la rotation du four (10) comprend l'arrêt de la rotation du four dans une position dans laquelle le matériau qui y est contenu tombe dans la deuxième partie (6), hors de l'écoulement de gaz et à l'écart des surfaces chaudes de la zone de traitement.
